(19) **Europäisches Patentamt**
**European Patent Office**
**Office européen des brevets**

(11) **EP 4 322 014 B1**

(12) **EUROPEAN PATENT SPECIFICATION**

(45) Date of publication and mention
of the grant of the patent:
**04.06.2025 Bulletin 2025/23**

(21) Application number: **22189859.6**

(22) Date of filing: **11.08.2022**

(51) International Patent Classification (IPC):
*G06F 13/362* (2006.01)    *H04J 3/04* (2006.01)
*H04J 3/06* (2006.01)    *G06F 13/20* (2006.01)
*G06F 13/372* (2006.01)    *H04L 12/403* (2006.01)
*H04L 12/40* (2006.01)    *G06F 13/42* (2006.01)
*G06F 13/366* (2006.01)    *H04L 25/02* (2006.01)

(52) Cooperative Patent Classification (CPC):
**G06F 13/4282; G06F 13/20; G06F 13/3625;**
**G06F 13/366; G06F 13/372; G06F 13/4286;**
**H04L 12/4015; H04L 12/4035;** H04L 25/0264

(54) **SERIAL CONNECTION FOR DATA TRANSMISSION BETWEEN AT LEAST TWO DRIVERS AND A LISTENER AND INERTIAL MEASUREMENT UNIT COMPRISING SAID SERIAL CONNECTION**

SERIELLE VERBINDUNG ZUR DATENÜBERTRAGUNG ZWISCHEN MINDESTENS ZWEI TREIBERN UND EINEM HÖRER UND TRÄGHEITSMESSEINHEIT MIT DIESER SERIELLEN VERBINDUNG

CONNEXION SÉRIE POUR LA TRANSMISSION DE DONNÉES ENTRE AU MOINS DEUX PILOTES ET UN AUDITEUR ET UNITÉ DE MESURE INERTIELLE COMPRENANT LADITE CONNEXION SÉRIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**14.02.2024 Bulletin 2024/07**

(73) Proprietor: **Safran Sensing Technologies Norway AS**
**3185 Skoppum (NO)**

(72) Inventors:
• **PETERSEN, Hans Richard**
**3195 SKOPPUM (NO)**
• **HOLM, Reidar**
**3195 SKOPPUM (NO)**

(74) Representative: **Casalonga**
**Casalonga & Partners**
**Bayerstraße 71/73**
**80335 München (DE)**

(56) References cited:
**JP-A- H06 348 649     US-A1- 2012 243 559**
**US-B2- 7 848 232**

EP 4 322 014 B1

**Description**

The present invention relates to serial electrical connections for exchanging data between systems, and more particularly the multiplexing of such connections.

The RS-422 connection is a point-to-point serial connection as specified by the American National Standard Institute (ANSI) in the norm « standard ANSI/TIA/EIA-422-B Electrical Characteristics of Balanced Voltage Differential Interface Circuits ».

The RS-422 connection comprises a driver, a bus and a listener, the bus connecting the driver and the listener. The driver emits data by modifying the bus voltage while the listener receives data by reading the bus voltage. In other words, the variations of the bus voltage are linked to the messages sent by the driver and received by the listener.

A message sent or received on an RS-422 connection is formed as a datagram comprising a preset number of characters. A character is a collection of bits in a predefined order. In an RS-422 connection, bits are signaled as negative or positive differential voltage over a two-strands twisted pair wire forming the bus.

Depending on the application, there is a need for connecting several data generation means through an RS-422 bus to the same listener (i.e. to achieve redundancy or improved overall performance).

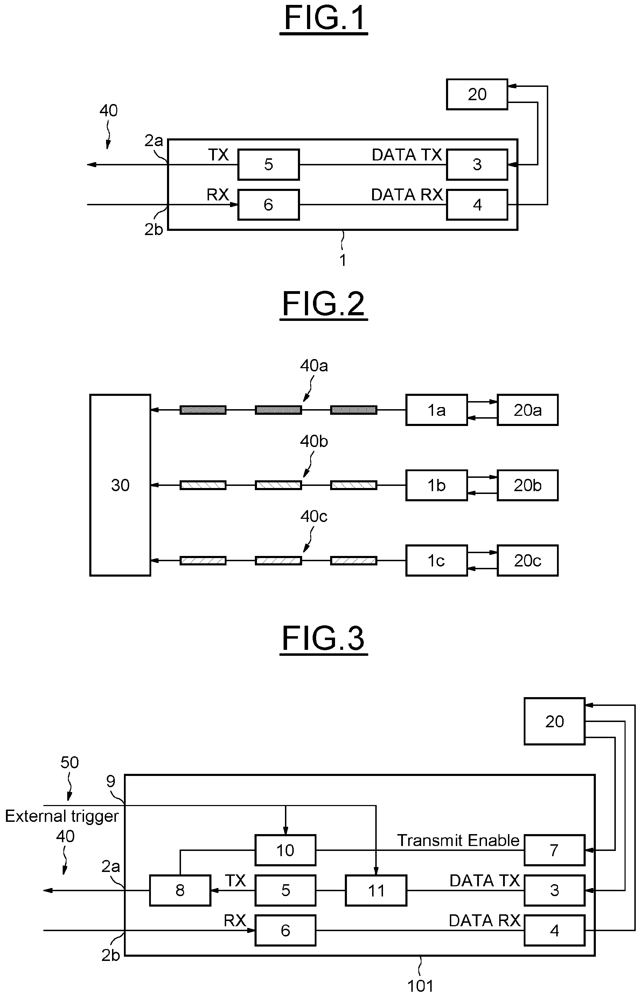

Figure 1 illustrates the main components of a RS-422 driver referenced 1.

An RS-422 driver 1 comprises an output 2a through which data can be transmitted as messages and an input 2b through which messages can be received.

The output 2a is connected to a first receiver transmitter UART (acronym for "Universal Asynchronous Receiver Transmitter") of the FIFO type (acronym for "First in first out"), configured as a transmitter, referenced 5, connected itself to a data transmitter 3.

The input 2b is connected to a second receiver transmitter UART FIFO, configured as a receiver, referenced 6, connected itself to a data receiver 4.

The RS-422 driver 1 is connected to data generation means 20 through the data transmitter 3 and the data receiver 4. Data generation means 20 can be processors, memories, and/or sensors.

Once connected and powered, an RS-422 connection periodically exchanges messages as its driver 1 is designed for continuous transmissions. This behavior makes connecting multiple RS-422 drivers on the same bus impossible as the messages transmitted by the drivers would be indistinguishable one from the other.

Figure 2 illustrates several data generation means 20a,20b,20c connected to a single system 30 through different RS-422 drivers 1a,1b,1c and their respective buses 40a,40b,40c. The system 30 is the listener of each RS-422 connection. Each data generation means 20a,20b,20c exchanges messages with the system 30 over its own RS-422 bus.

In some applications, it is not possible nor favorable to use multiple RS-422 connections, either space-wise, cost-wise or CPU overhead-wise. The different data generation means 20a,20b,20c have to be connected to the system 30 through a single bus 40.

Since the RS-422 connection is not able to connect multiple listeners to a single bus, other connection standards have been considered.

The RS-485 connection is a relatively newer serial connection, that is operable either as a point-to-point connection or as a multipoint connection. It is specified by the ANSI in the norm ANSI/TIA/EIA-485-A-1998.

Despite being an updated standard with enhanced abilities thanks to a multipoint operation, the RS-485 connection differs structurally from RS-422. RS-422 drivers are backward compatible with RS-485 but at the cost of multipoint capabilities. A true multipoint operation then requires some structural modifications to be retrofitted into existing or legacy applications. Furthermore, RS-422 connections are well-known for their performances (stability, accuracy and robustness) and customers rely on them for long term product-line in order to keep momentum, legacy and confidence. Changing the RS-422 interface for a more recent one (RS-485 for instance) is not welcome and would impact legacy products.

The same feedback has been received for retrofitting other connection standards with multipoint capabilities into RS-422 products.

Consequently, the RS-422 connection has to be kept. It results from this situation that the technical problem to be solved is how to connect several RS-422 drivers to the same RS-422 listener over a single RS-422 bus while still being able to receive and distinguish the datagrams received by the listener.

The following documents from the previous art are known. Document US 7 848 232 discloses a time division multiplexed communication bus comprising a master device and at least slave device, wherein the slave device is commanded by the master device to a emit their data on a common bus at set times.

Document US2012/243559 and document JP H06 348649 disclose a time division multiplexed communication bus comprising a master device and at least two slave devices connected by a common data bus. The slave devices are also daisy-chained with direct connections.

Neither document solve the problem highlighted above, of a communication bus between multiple devices which is compatible with a RS-422 driver.

An aspect of the invention is a serial connection for connecting a listener to at least two drivers through a single serial bus, wherein each driver is also connected to the listener through a common connection carrying an external trigger signal, each driver comprising:

- a first receiver transmitter of the FIFO type, connected in between the output and a data transmitter connected to data generation means, the first receiver transmitter is configured as a transmitter,
- an external trigger input connected to the common connection, to a timer and a data latch,
- a high impedance output control connected to the output of the first receiver transmitter, configured to not allow data through unless a command is received from a toggle signal transmitter,
- the timer connected between the toggle signal transmitter and the high impedance output control, configured to allow the command from the toggle signal transmitter to go through after lapsing of a predetermined duration starting as an external trigger event happens, the external trigger event being based on the external trigger signal, the predetermined duration being different for each driver,
- the data latch connected between the data transmitter and the first receiver transmitter, configured to allow the data through upon detecting the external trigger event.

An external trigger event can be based on a voltage change of the external trigger signal, in particular a rising edge of the voltage, a falling edge of the voltage or a preset level of the voltage.

Each driver can be assigned a unique identification number, the predetermined duration being determined as the identification number times a preset value.

The timer can be configured to allow the command from the toggle signal transmitter to go through after a delay equal to the sum of the predetermined durations has lapsed since the last external trigger event happened.

In order to avoid on overlap of two sequential transmissions, the delay between two consecutive external trigger events can be set to a value at least greater than the sum of the predetermined durations for all the drivers connected to the serial bus.

The serial bus can be a twisted pair of conductors.

The serial bus, drivers and listener can be setup according to the RS-422 standard.

Another aspect of the invention is an inertial measurement unit comprising a serial connection as described above, wherein in data generation means are inertial measurement units comprising gyroscopes and accelerometers.

The present invention will be better understood from studying the detailed description of a number of embodiments considered by way of entirely non-limiting examples and illustrated by the attached drawing in which:

- Figure 1 illustrates the main components of a RS-422 driver,
- Figure 2 illustrates several data generation means connected to a single system through different RS-422 drivers and their respective buses,
- Figure 3 illustrates the main components of a driver according to the invention,
- Figure 4 illustrates a sequential transmission by three drivers connected to the same RS-422 bus upon an external trigger event, and
- Figure 5 illustrates a chronogram of the different signals and the resulting datagrams transmission, in a system with a listener, two drivers according to the invention, each connected to data generation means, one serial bus and a common connection.

In order to resolve the technical problem identified above and enabling connecting several RS-422 drivers to the same listener over the same bus, the different RS-422 drivers have to be disabled during their idle phase (i.e. when not transmitting), an external trigger has to be set in order to enable transmission of all the RS-422 drivers connected to the bus and an individual delay has to be set so that there is no overlap of the messages transmitted.

By disabling the RS-422 driver output when not transmitting, several drivers can be connected to the same RS-422 bus, similar to the configuration of the RS-485 interface. Disabling the RS-422 driver output can be achieved by being placed in a high-impedance mode.

By introducing an individual delay to each driver and a common trigger-signal to all drivers, a chain of sequential data transmissions can be obtained.

Figure 3 illustrates the main components of a driver 101 according to the invention.

The components in common with a regular RS-422 driver 1 as illustrated by Figure 1 bear the same references.

A driver 101 according to the invention comprises an output 2a through which data can be transmitted as messages or datagrams, an input 2b through which messages or datagrams can be received.

The output 2a is connected to a first receiver transmitter UART 5, configured as a transmitter, connected itself to a data transmitter 3.

The input 2b is connected to a second receiver transmitter UART 6, configured as a receiver, connected itself to a data receiver 4.

Both receiver transmitters 5,6 are of the FIFO type, which implies that data received by the receiver transmitters 5,6 is transmitted in the order they are received. In other words, the first data to arrive is the first data to be transmitted.

The driver 101 is connected to data generation means referenced 20 through the data transmitter 3, the data receiver 4 and the toggle signal transmitter 7.

In the present application, the data generation means is an IMU (acronym for "inertial measurement unit").

The driver 101 according to the invention comprises a high impedance output control referenced 8 connected to the toggle signal transmitter referenced 7. The high impedance output control 8 is connected between the output 2a and the first receiver transmitter 5. Upon receiving a command from the data generation means 20, the toggle signal transmitter 7 emits a toggle signal to the high impedance output control 8 so that messages from the first receiver transmitter 5 are allowed through. When no command is received from the toggle signal transmitter 7, the high impedance output control 8 does not allow the messages from the first receiver transmitter 5 to go through.

In an embodiment, a high impedance output control 8 comprises a three-way switch connected to the bus, to the driver and to a high impedance dipole. Unless a command is received from the toggle signal transmitter 7, the three-way switch connects the driver output to the high impedance, assuring that no signal is transmitted to the listener. When a command is received, the three-way switch connects the driver output to the bus allowing a signal to go through.

The driver 101 according to the invention further comprises a common connection 50 connected to an external trigger input 9, a timer 10 and a data latch 11.

The timer 10 is connected between the toggle signal transmitter 7 and the high impedance output control 8.

The data latch 11 is connected in between the data transmitter 3 and the first receiver transmitter 5.

Both the timer 10 and the data latch 11 are connected to the external trigger input 9.

Upon detecting an external trigger event, the data latch 11 allows the data transmitted by the data transmitter 3 to go through and the timer 10 allows the command from the toggle signal transmitter 7 to go through to the high impedance output control 8 after a predetermined duration $t_{trans\_dly}$ has lapsed since the external trigger event.

The predetermined duration $t_{trans\_dly}$ is set to a different value for each of the drivers 101 connected to the same bus. In an embodiment, each driver 101 is given a unique identification number ID comprised between 0 and the total number of drivers connected to the same bus. The predetermined duration $t_{trans\_dly}$ is then determined as the identification number ID times a preset value.

$$t_{trans\_dly} = ID * BitRate.CharLength.DatagramLength + MinDBD \quad [Eq. 1]$$

Where

ID is the identification number unique to each driver
BitRate is the receiver transmitter bit-rate in bits/s
CharLength is the character length in bits/byte
DatagramLength is the length of the transmitted datagram
MinDBD is the minimum delay between datagrams.

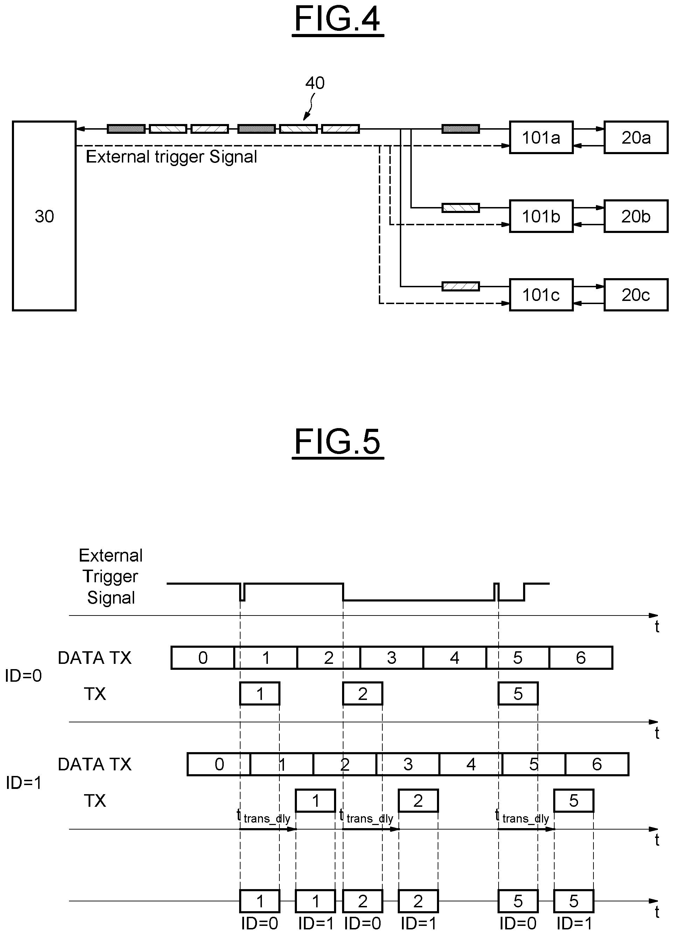

Suitable predetermined durations allow for sequential transmission of messages from each driver connected to the same RS-422 bus upon a single external trigger event. Figure 4 illustrates such a sequential transmission by three drivers 101a,101b,101c connected to the same RS-422 bus 40 upon an external trigger event associated with the external trigger signal transmitted by a listener 30 over a common connection 50.

Figure 5 illustrates a chronogram of different signals and the resulting datagrams transmission, in a system with a listener, two drivers each connected to data generation means, one serial bus and a common connection.

The first part of the chronogram illustrates the changes of the external trigger signal versus time.

The second part of the chronogram concerns the first driver 101a bearing an identification number ID equal to 0 and illustrates the change versus time of the data labelled DATA TX received from the first data generation means 20a within the first driver 101a and the change versus time of the data labelled TX let through for transmission based depending of the external trigger signal.

The third part of the chronogram concerns the second driver 101b bearing an identification number ID equal to 1 and illustrates the change versus time of the data labelled DATA TX received from the second data generation means 20b within the second driver 101b and the change versus time of the data labelled TX let through for transmission depending of the external trigger signal.

The fourth part of the chronogram illustrates the data transmitted on the same bus by the first driver 101a and the second driver 101b.

Each driver 101a,101b is configured to be triggered in transmission by an external trigger event. Vertical dashed lines identify the external trigger events. In the embodiment illustrated by Figure 5, an external trigger event happens with each falling edge of the external trigger signal. Other conditions can be chosen, such as each rising edge of the external trigger signal or a level of the external trigger signal.

Upon an external trigger event, the data latch 11 is triggered to allow the current data DATA TX transmitted by the data transmitter 3 to go through. The current data DATA TX allowed to go through the data latch 11 is then received by the first receiver transmitter 5, which immediately starts transmitting datagrams corresponding to the data received.

Upon an external trigger event, the timer 10 is also triggered so that the command transmitted by the toggle signal transmitter 7 allowed through after the predetermined duration $t_{trans\_dly}$ has lapsed. Counting the predetermined duration $t_{trans\_dly}$ is started as the external trigger event happens.

The toggle signal that is let through, is then received by the high impedance output control 8 which toggles a switch within the high impedance output control 8 so that datagrams transmitted by the first receiver transmitter 5 are allowed to go through.

It is to be noted that for the driver being affected the ID=0, the predetermined duration $t_{trans\_dly}$ is equal to zero per application of equation Eq. 1. Consequently, no predetermined duration $t_{trans\_dly}$ appears in the second part of the chronogram as illustrated on figure 5.

However, a predetermined duration $t_{trans\_dly}$ is illustrated in the third part of the chronogram as illustrated on figure 5 pertaining to the driver being affected the $\overline{ID}$=1. Indeed, for such an ID, the predetermined duration $t_{trans\_dly}$ is different from zero per application of equation Eq. 1

It is to be noted that, the predetermined duration $t_{trans\_dly}$ steadily increases as the identification number ID increases since the identification number ID contributes to the predetermined duration $t_{trans\_dly}$ as a first order contribution. Consequently, each driver emits its datagram sequentially one after the other as their ID increases. This allows the listener to identify each datagram with the ID affected to the driver it was transmitted by. The ID can also be transmitted as part of the datagram from each driver.

In order to avoid on overlap of two sequential transmissions, the delay between two consecutive external trigger events is to be set to a value at least greater than the sum of the predetermined durations over all the drivers connected to the serial bus.

The receiver transmitters 5,6 of the driver 101 according to the invention are the same that are in a driver 1 according to the RS-422 standard. The driver 101, when transmitting, is following the RS-422 standard and is fully compatible both with RS-422 buses and listeners.

However, due to the added components, multiple drivers can sequentially emit on a single bus so that a RS-422 listener can read the data transmitted. A processing unit linked to the RS-422 listener can emit the external trigger signal and then label each data received in order to sort out which data is sent by which driver based on their identification number ID.

The driver 101 according to the invention then solves the technical problem identified in introduction.

**Reference** list:

1,1a,1b,1c: driver according to the RS-422 standard
2a: output
2b: input
3: data transmitter
4: data receiver
5: first receiver transmitter
6: second receiver transmitter
7: toggle signal transmitter
8: high impedance output control 8
9: external trigger input
10: timer
11: data latch
20,20a,20b,20c: data generation means
30: listener according to the RS-422 standard
40, 40a,40b,40c: serial bus according to the RS-422 standard
50: common connection
101,101a,101b,101c: driver according to the invention

# EP 4 322 014 B1

## Claims

1. Serial connection for connecting a listener (30) to at least two drivers (101) through a single serial bus (40), wherein each driver (101) is also connected to the listener (30) through a common connection (50) carrying an external trigger signal, **characterized by** the fact that each driver (101) comprises:

   • a first receiver transmitter (5) of the FIFO type, connected in between the output (2a) and a data transmitter (3) connected to data generation means (20), the first receiver transmitter (5) being configured as a transmitter,
   • an external trigger input (9) connected to the common connection (50), to a timer (10) and a data latch (11),
   • a high impedance output control (8) connected to the output of the first receiver transmitter (5), configured to not allow data through unless a command is received from a toggle signal transmitter (7),
   • the timer (10) connected between the toggle signal transmitter (7) and the high impedance output control (8), configured to allow the command from the toggle signal transmitter (7) to go through after lapsing of a predetermined duration starting as an external trigger event happens, the external trigger event being based on the external trigger signal, the predetermined duration being different for each driver.
   • the data latch (11) connected between the data transmitter (3) and the first receiver transmitter (5), configured to allow the data through upon detecting the external trigger event.

2. Serial connection according to claim 1, wherein an external trigger event is based on a voltage change of the external trigger signal, in particular a rising edge of the voltage, a falling edge of the voltage or a preset level of the voltage.

3. Serial connection according to any of claims 1 or 2, wherein each driver (101) is assigned a unique identification number, the predetermined duration being determined as the identification number times a preset value.

4. Serial connection according to any of claims 1 to 3, wherein the timer (10) is configured to allow the command from the toggle signal transmitter (7) to go through after a delay equal to the sum of the predetermined durations has lapsed since the last external trigger event happened.

5. Serial connection according to any of claims 1 to 4, wherein, in order to avoid on overlap of two sequential transmissions, the delay between two consecutive external trigger events is to be set to a value at least greater than the sum of the predetermined durations for all the drivers (101) connected to the serial bus (40).

6. Serial connection according to claim 1 to 5, wherein the serial bus (40) is a twisted pair of conductors.

7. Serial connection according to any of claims 1 to 6, wherein the serial bus (40), drivers (101) and listener (30) are setup according to the RS-422 standard.

8. Inertial measurement unit comprising a serial connection as claimed in any of the claims 1 to 7, wherein in data generation means (20) are inertial measurement units comprising gyroscopes and accelerometers.

## Patentansprüche

1. Serielle Verbindung zum Verbinden eines Hörers (30) über einen einzigen seriellen Bus (40) mit mindestens zwei Treibern (101), wobei jeder Treiber (101) ebenfalls über eine gemeinsame Verbindung (50), die ein externes Triggersignal **übermittelt,** mit dem Hörer (30) verbunden ist, **dadurch gekennzeichnet, dass** jeder Treiber (101) umfasst:

   • einen ersten Empfänger/Sender (5) vom FIFO-Typ, der zwischen den Ausgang (2a) und einen Datensender (3), der mit Datenerzeugungsmitteln (20) verbunden ist, geschaltet ist, wobei der erste Empfänger/Sender (5) als Sender konfiguriert ist,
   • einen externen Triggereingang (9), der mit der gemeinsamen Verbindung (50), mit einem Timer (10) und einem Datenlatch (11) verbunden ist,
   • eine mit dem Ausgang des ersten Empfängers/Senders (5) verbundene Hochimpedanz-Ausgangssteuereinheit (8), die so konfiguriert ist, dass sie keine Daten durchlässt, es sei denn, es wird ein Befehl von einem Umschaltsignalsender (7) empfangen,
   • den zwischen den Umschaltsignalsender (7) und die Hochimpedanz-Ausgangssteuereinheit (8) geschalteten Timer (10), der so konfiguriert ist, dass er den Befehl vom Umschaltsignalsender (7) nach Verstreichen einer vorbestimmten Dauer, die beginnt, wenn ein externes Triggerereignis auftritt, durchlässt, wobei das externe Triggerereignis auf dem externen Triggersignal basiert, wobei die vorbestimmte Dauer für jeden Treiber unterschiedlich ist,
• das zwischen den Datensender (3) und den ersten Empfänger/Sender (5) geschaltete Datenlatch (11), das so konfiguriert ist, dass es bei Erkennen des externen Triggerereignisses die Daten durchlässt.

2. Serielle Verbindung nach Anspruch 1, wobei ein externes Triggerereignis auf einer Spannungsänderung des externen Auslösesignals, insbesondere einer steigenden Flanke der Spannung, einer fallenden Flanke der Spannung oder einem voreingestellten Pegel der Spannung, basiert.

3. Serielle Verbindung nach einem der Ansprüche 1 oder 2, wobei jedem Treiber (101) eine eindeutige Identifikationsnummer zugewiesen ist, wobei die vorbestimmte Dauer als Identifikationsnummer mal einem voreingestellten Wert bestimmt wird.

4. Serielle Verbindung nach einem der Ansprüche 1 bis 3, wobei der Timer (10) so konfiguriert ist, dass er den Befehl vom Umschaltsignalsender (7) durchlässt, nachdem eine Verzögerung, die gleich der Summe der vorbestimmten Dauern ist, seit dem Auftreten des letzten externen Triggerereignisses verstrichen ist.

5. Serielle Verbindung nach einem der Ansprüche 1 bis 4, wobei, um eine Überlappung von zwei sequentiellen Übertragungen zu vermeiden, die Verzögerung zwischen zwei aufeinanderfolgenden externen Triggerereignissen auf einen Wert eingestellt werden soll, der mindestens größer ist als die Summe der vorbestimmten Dauern für alle Treiber (101), die mit dem seriellen Bus (40) verbunden sind.

6. Serielle Verbindung nach Anspruch 1 bis 5, wobei der serielle Bus (40) ein verdrilltes Leiterpaar ist.

7. Serielle Verbindung nach einem der Ansprüche 1 bis 6, wobei der serielle Bus (40), die Treiber (101) und der Hörer (30) nach dem RS-422-Standard eingerichtet sind.

8. Trägheitsmesseinheit, die eine serielle Verbindung nach einem der Ansprüche 1 bis 7 umfasst, wobei sich in Datenerzeugungsmitteln (20) Trägheitsmesseinheiten befinden, die Gyroskope und Beschleunigungsmesser umfassen.

**Revendications**

1. Connexion en série pour connecter un écouteur (30) à au moins deux pilotes (101) par le biais d'un seul bus série (40), dans laquelle chaque pilote (101) est également connecté à l'écouteur (30) par le biais d'une connexion commune (50) portant un signal de déclenchement externe, **caractérisée par le fait que** chaque pilote (101) comprend :

• un premier émetteur récepteur (5) de type FIFO, connecté entre la sortie (2a) et un émetteur de données (3) connecté à des moyens de génération de données (20), le premier émetteur récepteur (5) étant configuré en tant qu'émetteur,
• une entrée de déclenchement externe (9) connectée à la connexion commune (50), à un temporisateur (10) et à un verrou de données (11),
• une commande de sortie à haute impédance (8) connectée à la sortie du premier émetteur récepteur (5), configurée pour ne pas autoriser le passage de données à moins qu'une commande ne soit reçue d'un émetteur de signal à bascule (7),
• le temporisateur (10) connecté entre l'émetteur de signal à bascule (7) et la commande de sortie à haute impédance (8), configuré pour permettre le passage de la commande de l'émetteur de signal à bascule (7) après l'expiration d'une durée prédéterminée à partir de la survenance d'un événement de déclenchement externe, l'événement de déclenchement externe étant basé sur le signal de déclenchement externe, la durée prédéterminée étant différente pour chaque pilote,
• le verrou de données (11) connecté entre l'émetteur de données (3) et le premier émetteur récepteur (5), configuré pour permettre le passage des données lors de la détection de l'événement de déclenchement externe.

2. Connexion en série selon la revendication 1, dans laquelle un événement de déclenchement externe est basé sur un changement de tension du signal de déclenchement externe, en particulier un front montant de la tension, un front descendant de la tension ou un niveau prédéfini de la tension.

**3.** Connexion en série selon l'une quelconque des revendications 1 ou 2, dans laquelle chaque pilote (101) se voit attribuer un numéro d'identification unique, la durée prédéterminée étant déterminée comme le numéro d'identification multiplié par une valeur prédéfinie.

**4.** Connexion en série selon l'une quelconque des revendications 1 à 3, dans laquelle le temporisateur (10) est configuré pour permettre le passage de la commande de l'émetteur de signal à bascule (7) après qu'un délai égal à la somme des durées prédéterminées s'est écoulé depuis que le dernier événement de déclenchement externe s'est produit.

**5.** Connexion en série selon l'une quelconque des revendications 1 à 4, dans laquelle, afin d'éviter un chevauchement de deux transmissions séquentielles, le délai entre deux événements de déclenchement externes consécutifs doit être défini à une valeur au moins supérieure à la somme des durées prédéterminées pour tous les pilotes (101) connectés au bus série (40).

**6.** Connexion en série selon la revendication 1 à 5, dans laquelle le bus série (40) est une paire torsadée de conducteurs.

**7.** Connexion en série selon l'une quelconque des revendications 1 à 6, dans laquelle le bus série (40), les pilotes (101) et l'écouteur (30) sont configurés selon la norme RS-422.

**8.** Unité de mesure inertielle comprenant une connexion en série selon l'une quelconque des revendications 1 à 7, dans laquelle des moyens de génération de données (20) sont des unités de mesure inertielle comprenant des gyroscopes et des accéléromètres.

# FIG.1

# FIG.2

# FIG.3

# FIG.4

40

External trigger Signal

30

101a ← 20a

101b → 20b

101c → 20c

# FIG.5

External
Trigger
Signal

t

DATA TX

ID=0

| 0 | 1 | 2 | 3 | 4 | 5 | 6 |

TX

| 1 | | 2 | | | 5 | |

t

DATA TX

ID=1

| 0 | 1 | 2 | 3 | 4 | 5 | 6 |

TX

| | 1 | | 2 | | | 5 |

$t_{trans\_dly}$  $t_{trans\_dly}$  $t_{trans\_dly}$

t

| 1 | 1 | 2 | 2 | | 5 | 5 |
ID=0  ID=1  ID=0  ID=1     ID=0  ID=1

t

**EP 4 322 014 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7848232 B
- US 2012243559 A

- JP H06348649 B